Europäisches Patentamt

European Patent Office

Office européen des brevets

(19)

(11) Publication number: **0 118 139**
**B1**

(12) **EUROPEAN PATENT SPECIFICATION**

(45) Date of publication of patent specification: **28.05.86**

(51) Int. Cl.⁴: **F 24 D 3/00,** A 01 K 1/015

(21) Application number: **84200101.8**

(22) Date of filing: **27.01.84**

(54) A heatable metal floor in a stable.

(30) Priority: **12.02.83 NL 8300534**

(43) Date of publication of application:
**12.09.84 Bulletin 84/37**

(45) Publication of the grant of the patent:
**28.05.86 Bulletin 86/22**

(84) Designated Contracting States:
**AT BE CH DE FR GB IT LI LU NL SE**

(56) References cited:
**FR-A-2 198 516**
**FR-A-2 435 880**
**GB-A-2 095 814**
**NL-A-7 410 937**
**NL-A-7 905 924**
**NL-A-7 906 922**

(73) Proprietor: **Nooyen, Antonius Maria Aloysius**
**Kanveldweg 5**
**NL-5754 PM Deurne (NL)**

(72) Inventor: **Nooyen, Antonius Maria Aloysius**
**Kanveldweg 5**
**NL-5754 PM Deurne (NL)**

(74) Representative: **Noz, Franciscus Xaverius, Ir.**
**et al**
**Boschdijk 155 P.O. Box 645**
**NL-5600 AP Eindhoven (NL)**

Courier Press, Leamington Spa, England.

## Description

The invention relates to a heatable metal floor in a stable of, for example, a pig farm having a grate.

Dutch Patent Application 7906922 describes a slotted grating by which a floor can be formed in boxes or sties for sows and piglings. This known grating has different openings, the size of which varies throughout the grating. Such a grating can be heated on the underside by connecting the pipes serving as longitudinal carriers with a heating system or by electric heating. In practice, however, it has been found that heating such a grating is disadvantageous with respect to energy, because the major part of the heat is imparted to the ambient air so that the relative heating of the grating is low. Moreover, the hot air rises which may be the cause of diseases with the piglings. On the other hand, however, it is desirable for the piglings to have a heatable floor part particularly for the first days when they stay with the sow. Therefore, experiments have been carried out with floors having a heatable portion made from concrete. In the concrete portion the floor heating system is arranged, the principle of which is generally known from the floor heating systems in houses as described in Dutch Patent Applications 7903898 and 7901881.

One of the known disadvantages of this known floor construction is that the concrete portion has to be supported by a wall arranged in the opening above which is lying the grating part. In the space below the grating the excrements of the animals are collected and conducted away therefrom so that a wall in such a pit constitutes a hindrance for the removal of the manure. A further disadvantage of a concrete floor structure is that the surface is rough and the piglings may be injured by galls particularly at the knees due to the scratching effect of the increasingly rougher concrete floor surface. The latter disadvantage can be mitigated by applying a smooth layer to the concrete floor surface, but this layer was soon abrazed, whilst the application of a smooth coating brought about other drawbacks.

These problems are now obviated by using a heatable floor in accordance with the invention of the kind set forth in the preamble of claim 1, which is characterized in that the floor comprises a continuous heated metal portion provided on the underside with a pipe system for passing heatable fluid which metal portion is juxtaposed in the same plane with said grate which is not heatable. Advantageous embodiments of the invention are contained in the dependent claims 2—7.

In order to minimize the maintenance of the heatable floor it is preferred to provide the closed part of the floor, the plate portion with a pipe system comprising parallel, non-interconnected pipes, through which a hose can be passed to conduct a heated fluid, for example, gas or a liquid. The parallel pipes are fastened (welded) throughout the surface to the steel plate in order to ensure optimum heat transfer between the pipe system and the plate. In order to minimize loss of heat on the underside the pipe system is provided with heat insulating material.

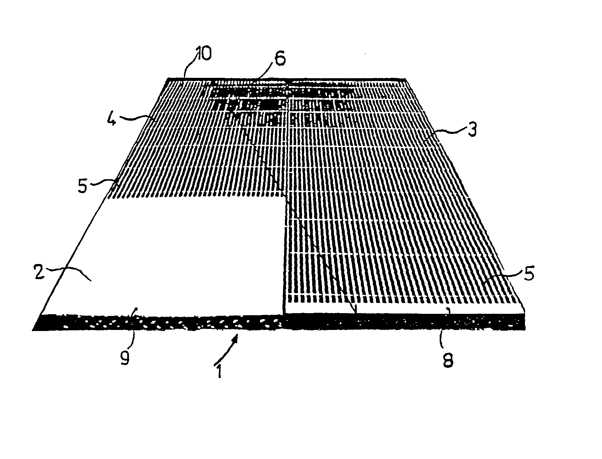

The invention will be further described with reference to the accompanying drawing which shows a heatable floor embodying the invention.

Referring to the Figure the floor is designated by reference numeral 1, the closed portion 2 and the grate portion by 3 or 4. The grate portion, which does not comprise a closed part, is the place for the sow. The sow will be in a slightly diagonal position on the grate and be separated by a fence from the closed part. Since the sow occupies a slightly diagonal position on the grate the length of the grate may be at a minimum. The piglings will prefer the closed, heated portion 2 and the grate portion 4 which can be fenced from the grate portion 3. The fence 6 is preferably disposed on the floor in a manner such that the distances 8 and 9 have a ratio of about 1:2. The heatable plate 2 is provided on the underside with pipes through which a heatable fluid can be passed with the aid of a hose inserted into the pipes. The heat of the fluid will thus be transferred to the plate portion 2. Owing to the insulation on the underside of the plate 2 the heat can be utilized to the optimum for heating the plate. In practice it has been found that the piglings do not soil the plate with excrements because they will not soil a place where they reside for a long time. The excrements are dropped on the grate portion, preferably on the grate portion on the other side of the heatable plate 2 i.e. the grate corner 10.

The metal plate 2 is preferably made from steel because in this way a cheap and structurally satisfying, heatable floor portion can be obtained. It is furthermore advisable to galvanize the steel plate 2. The plate 2 and the pipes below the plate need not be made from the same metal. It may be advantageous to make the plate portion from galvanized steel and the pipes from aluminium. The top surface of the heatable plate 2 is coated with an anti-slip profile so that the animals can easily move along the plate. This plate extending along one third of the length of the grate and about half the width of the grating is directly adjoined to the grate, which is preferably formed by bars 5 having a triangular profile. This triangular profile has the advantage that the ratio between the weight of the grate and the effective surface is as low as possible, whereas the grate has nevertheless sufficient mechanical strength.

By this construction of the floor embodying the invention gall injuries of the animals are avoided, whilst by minimum costs of energy a sufficiently high temperature of the floor in the stable can be obtained, which floor can be constructed and disposed in a simple manner and does not require much maintenance, if any. Moreover, the metal surface without pores provides a more hygienic surface in the stable than that of concrete floors.

## Claims

1. A heatable metal floor in a stable of, for example, a pig farm with a grate (3, 4) characterized in that the floor comprises a continuous, heatable metal portion (2) provided on the underside with a pipe system for passing heatable fluid, which metal portion is juxtaposed in the same plane with said grate (3,4) which is not heatable.

2. A floor as claimed in Claim 1 characterized in that a hose is passed through the pipes not continuously connected with one another for a stream of said heatable fluid.

3. A floor as claimed in Claims 1 and 2 characterized in that the heatable portion extends along about one quarter to one half of the length of the grate portion.

4. A floor as claimed in Claim 2 characterized in that the heatable portion is made from galvanized steel.

5. A floor as claimed in Claims 1 to 4 characterized in that the heatable portion is insulated on the underside.

6. A floor as claimed in Claims 1 to 5 characterized in that the heatable portion consists of a steel plate provided with an anti-slip profile.

7. A floor as claimed in Claim 6 characterized in that the grate (3, 4) consists of bars having a triangular profile.

## Patentansprüche

1. Metallheizboden für einen Stall z.B. einer Schweinefarm, mit einem Gitterrost (3, 4), dadurch gekennzeichnet, daß der Boden einen durchgehenden aufheizbaren Metallabschnitt (2) aufweist, der an der Unterseite mit einem Rohrsystem zum Durchtritt eines Heizfluids versehen ist, welcher Metallabschnitt in derselben Ebene wie der Gitterrost (3, 4), der nicht heizbar ist, angeordnet ist.

2. Boden nach Anspruch 1, dadurch gekennzeichnet, daß für einen Durchfluß dieses Heizfluids ein Schlauch durch die nicht kontinuierlich miteinander verbundenen Rohre geführt ist.

3. Boden nach den Ansprüchen 1 und 2, dadurch gekennzeichnet, daß sich der Heizabschnitt längs etwa ein Viertel bis zu einer Hälfte der Länge des Gitterrostes erstreckt.

4. Boden nach Anspruch 2, dadurch gekennzeichnet, daß der Heizabschnitt aus verzinktem Stahlblech hergestellt ist.

5. Boden nach den Ansprüche 1 bis 4, dadurch gekennzeichnet, daß der Heizabschnitt auf der Unterseite isoliert ist.

6. Boden nach den Ansprüchen 1 bis 5, dadurch gekennzeichnet, daß der Heizabschnitt aus einer Stahlplatte mit einem Antirutschprofil besteht.

7. Boden nach Anspruch 6, dadurch gekennzeichnet, daß der Gitterrost (3, 4) aus Stangen mit einem Dreiecksprofil besteht.

## Revendications

1. Plancher métallique chauffable dans une étable, par exemple d'une porcherie, comportant une grille (3, 4), caractérisé en ce que le plancher comprend une partie métallique continue (2), chauffable, munie sur la face inférieure d'un système de tubes pour le passage d'un fluide chauffable, cette partie métallique étant juxtaposée dans le même plan avec ladite grille (3, 4) qui n'est pas chauffable.

2. Plancher suivant la revendication 1, caractérisé en ce qu'on fait passer un tuyau flexible dans les tubes qui ne sont raccordés de façon continue les uns aux autres, pour une circulation dudit fluide chauffable.

3. Plancher suivant les revendications 1 et 2, caractérisé en ce que la partie chauffable s'étend sur un quart à une moitié environ de la longueur de la grille.

4. Plancher suivant la revendication 2, caractérisé en ce que la partie chauffable est fabriquée en acier galvanisé.

5. Plancher suivant les revendications 1 à 4, caractérisé en ce que la partie chauffable est isolée thermiquement sur la face inférieure.

6. Plancher suivant les revendications 1 à 5, caractérisé en ce que la partie chauffable est constituée d'une plaque d'acier comportant un profil anti-dérapant.

7. Plancher suivant la revendication 6, caractérisé en ce que la grille (3, 4) est constituée de barres à section triangulaire.